# EUROPÄISCHE PATENTANMELDUNG

(11) **EP 4 095 021 A1**
(43) Veröffentlichungstag der Anmeldung: **30.11.2022**
(21) Anmeldenummer: 21176658.9
(22) Anmeldetag: 28.05.2021
(51) Int. Cl.: B62D 25/16

(54) **VORRICHTUNG ZUR DEMONTAGE UND/ODER MONTAGE WENIGSTENS EINES KOTFLÜGELS**

(71) Anmelder: EPSILON Kran GmbH., 5020 Salzburg (AT)
(72) Erfinder: Die Erfindernennung liegt noch nicht vor
(74) Vertreter: Torggler & Hofmann Patentanwälte - Innsbruck

(57) **Zusammenfassung**

Vorrichtung (1) zur Demontage und/oder Montage wenigstens eines Kotflügels (2), umfassend wenigstens eine Lösevorrichtung (3), insbesondere in Form eines Gestänges (21), wobei an der wenigstens einen Lösevorrichtung (3) wenigstens zwei Verriegelungselemente (4) angeordnet sind, und wenigstens ein an der wenigstens einen Lösevorrichtung (3) angeordnetes Betätigungselement (5), wobei die wenigstens zwei Verriegelungselemente (4) durch eine Betätigung des wenigstens einen Betätigungselementes (5) aus einer Freigabestellung (F) in oder an wenigstens zwei Verriegelungsvorrichtungen (7) gemeinsam verriegelbar und/oder aus einer Verriegelungsstellung (V) in oder an den wenigstens zwei Verriegelungsvorrichtungen (7) gemeinsam entriegelbar sind.

## Beschreibung

Die Erfindung betrifft eine Vorrichtung zur Demontage und/oder Montage wenigstens eines Kotflügels, umfassend wenigstens eine Lösevorrichtung, insbesondere in Form eines Gestänges, wobei an der wenigstens einen Lösevorrichtung wenigstens zwei Verriegelungselemente angeordnet sind, und wenigstens ein an der wenigstens einen Lösevorrichtung angeordnetes Betätigungselement. Weiters betrifft die Erfindung eine solche Vorrichtung mit wenigstens einem Kotflügel umfassend wenigstens zwei Halterungen zur Anordnung an wenigstens zwei Verriegelungsvorrichtungen und/oder mit wenigstens zwei Kotflügeln umfassend wenigstens eine Halterung zur Anordnung an wenigstens zwei Verriegelungsvorrichtungen, wobei wenigstens zwei Halterungen in oder an wenigstens zwei Verriegelungsvorrichtungen anordenbar oder angeordnet sind. Des Weiteren betrifft die Erfindung ein Verfahren zur Demontage wenigstens eines Kotflügels durch wenigstens eine solche Vorrichtung, wobei der wenigstens eine Kotflügel über wenigstens eine Halterung an wenigstens einer von wenigstens zwei Verriegelungsvorrichtungen angeordnet ist und wenigstens zwei Verriegelungselemente in einer Verriegelungsstellung in oder an den wenigstens zwei Verriegelungsvorrichtungen vorliegt. Des Weiteren betrifft die Erfindung ein Verfahren zur Montage wenigstens eines Kotflügels durch wenigstens eine solche Vorrichtung, wobei wenigstens zwei Verriegelungselemente in einer Verriegelungsstellung oder einer Freigabestellung vorliegen.

Aus dem Stand der Technik sind Vorrichtungen zur Demontage und/oder Montage eines Kotflügels bekannt, um beispielsweise Schneeketten einfacher an Reifen anlegen zu können, wobei am Kotflügel Halterungen in Form von Kotflügelrohren befestigt sind, welche in an einem Hilfsrahmen angeschweißte Rahmenrohre eingeschoben werden. Die Rohre können durch eine an den Enden der Rohre angeordnete Verriegelungsvorrichtung zueinander fixiert werden.

Nachteilig am Stand der Technik ist, dass ein Lösen der Rohre über die Verriegelungsvorrichtung zeitaufwändig ist sowie ein erhebliches Geschick eines Bedieners der Vorrichtung bedarf, da die Verriegelungsvorrichtung schwer zugänglich am Fahrzeug verortet ist. Des Weiteren ist nachteilig, dass das Lösen der Rohre unkomfortabel ist, da nach dem Lösen einer ersten Verriegelungsvorrichtung die Position des Bedieners der Vorrichtung geändert werden muss, um die nächste Verriegelung der weiteren Rohre zu lösen zu können.

Die objektiv technische Aufgabe der vorliegenden Erfindung besteht daher darin, eine gegenüber dem Stand der Technik verbesserte Vorrichtung zur Demontage und/oder Montage wenigstens eines Kotflügels anzugeben, bei welcher die Nachteile des Standes der Technik zumindest teilweise behoben sind, und welche sich insbesondere durch die Möglichkeit einer komfortableren Demontage und Montage wenigstens eines Kotflügels auszeichnet.

Diese Aufgabe wird durch die Merkmale des Anspruches 1 gelöst.

Es ist demnach erfindungsgemäß vorgesehen, dass die wenigstens zwei Verriegelungselemente durch eine Betätigung des wenigstens einen Betätigungselementes aus einer Freigabestellung in oder an wenigstens zwei Verriegelungsvorrichtungen gemeinsam verriegelbar und/oder aus einer Verriegelungsstellung in oder an den wenigstens zwei Verriegelungsvorrichtungen gemeinsam entriegelbar sind.

Dadurch wird es erst ermöglicht, dass ein Bediener der Vorrichtung mit einer Bewegung gleichzeitig zumindest zwei Verriegelungen des wenigstens einen Kotflügels lösen kann. Dies bietet einen erhöhten Komfort in der Demontage des wenigstens einen Kotflügels.

Hinzu kommt die positive Eigenschaft, dass der Bediener der Vorrichtung bei der Betätigung des wenigstens einen Betätigungshebels eine Hand frei zur Verfügung hat und dadurch beispielsweise eine Adjustage des wenigstens einen Kotflügels während Montage und/oder eine Bewegung des wenigstens einen Kotflügels während der Demontage vornehmen kann.

Zudem wird es ermöglicht, mit einem Handgriff eine Vielzahl an Kotflügeln in einem Verfahrensschritt, vorzugsweise gleichzeitig, zu verriegeln und eine Vielzahl an Kotflügeln in einem Verfahrensschritt, vorzugsweise gleichzeitig, zu entriegeln, wodurch eine benutzerfreundlichere Montage/Demontage von Kotflügeln gegeben ist und Zeit eingespart werden kann.

Bei dem wenigstens einen Kotflügel handelt es sich bevorzugt um einen LKW-Kotflügel eines Fahrzeuges in Form eines LKWs, besonders bevorzugt eines Forstanhängers oder Holztransporters zum Transport von land- oder forstwirtschaftlichen Gütern.

Wie eingangs ausgeführt, wird Schutz auch begehrt für eine solche Vorrichtung mit wenigstens einem Kotflügel umfassend wenigstens zwei Halterungen zur Anordnung an wenigstens zwei Verriegelungsvorrichtungen und/oder mit wenigstens zwei Kotflügeln umfassend wenigstens eine Halterung zur Anordnung an wenigstens zwei Verriegelungsvorrichtungen, wobei wenigstens zwei Halterungen in oder an wenigstens zwei Verriegelungsvorrichtungen anordenbar oder angeordnet sind.

Wie eingangs ausgeführt, wird Schutz auch begehrt für ein Verfahren zur Demontage wenigstens eines Kotflügels durch wenigstens eine solche Vorrichtung, wobei der wenigstens eine Kotflügel über wenigstens eine Halterung an wenigstens einer von wenigstens zwei Verriegelungsvorrichtungen angeordnet ist und wenigstens zwei Verriegelungselemente in einer Verriegelungsstellung in oder an den wenigstens zwei Verriegelungsvorrichtungen vorliegt, wobei durch ein Betätigen wenigstens eines Betätigungselementes die wenigstens zwei Verriegelungselemente über wenigstens eine Lösevorrichtung, vorzugsweise durch eine Rotation der wenigstens einen Lösevorrichtung, gemeinsam aus der Verriegelungsstellung gelöst werden und die wenigstens eine Halterung von der wenigstens einen Verriegelungsvorrichtung entfernt wird, wobei vorzugsweise vorgesehen ist, dass durch das Betätigen des wenigstens einen Betätigungselementes wenigstens ein Kraftspeicher geladen wird.

Wie eingangs ausgeführt, wird Schutz auch begehrt für ein Verfahren zur Montage wenigstens eines Kotflügels durch wenigstens eine solche Vorrichtung, wobei wenigstens zwei Verriegelungselemente in einer Verriegelungsstellung oder einer Freigabestellung vorliegen, wobei die folgenden, vorzugsweise in chronologischer Reihenfolge durchgeführten, Verfahrensschritte ausgeführt werden:
- Anordnen wenigstens eines Kotflügels über wenigstens eine Halterung in wenigstens einer von wenigstens zwei Verriegelungsvorrichtungen,
- Betätigen wenigstens eines Betätigungselementes, vorzugsweise zur Rotation wenigstens einer Lösevorrichtung, wobei die wenigstens zwei Verriegelungselemente in oder an den wenigstens zwei Verriegelungsvorrichtungen gemeinsam verriegelt werden.

Vorteilhafte Ausführungsformen der Erfindung sind in den abhängigen Ansprüchen definiert.

Gemäß einer vorteilhaften Ausgestaltung der Erfindung ist vorgesehen, dass das wenigstens eine Betätigungselement in Form wenigstens eines Hebels ausgebildet ist und die wenigstens zwei Verriegelungselemente bei einer Rotation des wenigstens einen Hebels in eine erste Drehrichtung aus der Freigabestellung in oder an den wenigstens zwei Verriegelungsvorrichtungen verriegelbar und/oder bei einer Rotation des wenigstens einen Hebels in eine zweite Drehrichtung aus der Verriegelungsstellung in oder an den wenigstens zwei Verriegelungsvorrichtungen entriegelbar sind.

Durch wenigstens einen Hebel wird die Rotation der wenigstens einen Lösevorrichtung erleichtert, wodurch eine Entriegelung und/oder eine Verriegelung des wenigstens einen Kotflügels besonders begünstigt erwirkt werden kann. Zudem ist ein reduzierter Kraftaufwand durch den Bediener der Vorrichtung ausreichend, um den wenigstens einen Kotflügel zu demontieren und/oder zu montieren.

Die Verriegelungsvorrichtungen können in stoffschlüssiger Verbindung mit dem Hilfsrahmen oder einer Hilfsstruktur des Hilfsrahmens stehen oder beispielsweise durch eine Schraub- und/oder Klemmverbindung mit dem Hilfsrahmen oder einer Hilfsstruktur des Hilfsrahmen verbunden sein.

Vorteilhafter Weise ist vorgesehen, dass der wenigstens eine Kotflügel wenigstens eine Halterung zur Anordnung an den wenigstens zwei Verriegelungsvorrichtungen aufweist, wobei die wenigstens eine Halterung in der Freigabestellung der wenigstens zwei Verriegelungselemente von den wenigstens zwei Verriegelungsvorrichtungen lösbar und in der Verriegelungsstellung und/oder bei einem Übergang aus der Freigabestellung in die Verriegelungsstellung der wenigstens zwei Verriegelungselemente in oder an den wenigstens zwei Verriegelungsvorrichtungen verriegelbar ist, wobei vorzugsweise vorgesehen ist, dass die wenigstens eine Halterung in der Freigabestellung und/oder der Verriegelungsstellung an den wenigstens zwei Verriegelungsvorrichtungen anordenbar ist.

Durch wenigstens eine Halterung wird eine lagesichere Positionierung des wenigstens einen Kotflügels in den wenigstens zwei Verriegelungsvorrichtungen ermöglicht.

Die Form der Halterung ist im Allgemeinen beliebig. Besonders bevorzugt ist eine rohrförmige Halterung, welche als Teil des wenigstens einen Kotflügels ausgebildet ist, in stoffschlüssiger Verbindung mit dem wenigstens einen Kotflügel steht oder an dem wenigstens einen Kotflügel beispielsweise über eine Schraub- und/oder Klemmverbindung angeordnet ist, da dadurch die Standzeit des wenigstens einen Kotflügels erhöht werden und durch eine Geometrie der Halterung ein Einschieben in eine der wenigstens zwei Verriegelungsvorrichtungen erleichtert werden kann.

Beispielsweise kann an einer Außenseite der Halterung eine Rastkontur angeordnet sein, welche in einer der wenigstens zwei Verriegelungsvorrichtungen einrastbar ist.

Gemäß einer vorteilhaften Ausführungsform der Erfindung ist vorgesehen, dass die wenigstens eine Lösevorrichtung, vorzugsweise an einem Fahrzeugrahmen und/oder einer an dem Fahrzeugrahmen angeordneten Hilfsstruktur, drehbar gelagert oder lagerbar ist.

Dadurch wird ermöglicht, dass eine Rotation zur Entriegelung/Verriegelung der wenigstens zwei Verriegelungselemente sowie eine Kraftübertragung auf den Fahrzeugrahmen besonders begünstigt werden.

Als günstig hat sich erwiesen, dass das wenigstens eine Betätigungselement über einen zentralen Bereich an der wenigstens einen Lösevorrichtung angeordnet ist und wenigstens ein erstes freies Ende zur Rotation der wenigstens einen Lösevorrichtung aufweist, wobei vorzugsweise vorgesehen ist, dass an dem wenigstens einem ersten freien Ende wenigstens ein Griff angeordnet ist.

Durch eine zentrale Anordnung des wenigstens einen Betätigungselementes kann das Betätigungselement zwischen zwei Kotflügeln angeordnet werden, wodurch eine kompaktere Vorrichtung gegeben wird, da ein Raum zwischen zwei Kotflügeln effizient ausgenützt wird. Zudem wird eine Belastung der wenigstens einen Lösevorrichtung bei einer Rotation der wenigstens einen Lösevorrichtung reduziert. Es können jedoch auch beispielsweise zwei Betätigungselemente voneinander beabstandet zwischen jeweils zwei Kotflügeln angeordnet werden.

Durch einen Griff wird der Komfort in einer Benutzung der Vorrichtung erhöht und eine Verletzungsgefahr beispielsweise durch Fertigungsungenauigkeiten oder Grate reduziert.

Als vorteilhaft hat sich erwiesen, dass die wenigstens eine Lösevorrichtung mit dem wenigstens einen Betätigungselement und/oder den wenigstens zwei Verriegelungselementen stoffschlüssig verbunden ist.

Durch die stoffschlüssige Verbindung wird eine Wartung der Vorrichtung erleichtert, da weniger gesonderte Bauteilkomponenten vorhanden sind. Zudem wird eine zuverlässige Kraftübertragung zwischen dem wenigstens einen Betätigungselement und den wenigstens zwei Verriegelungselementen gewährleistet.

Eine vorteilhafte Variante besteht darin, dass die wenigstens zwei Verriegelungselemente in Form wenigstens zweier, vorzugsweise stoffschlüssig mit der wenigstens einen Lösevorrichtung verbundenen, Blechteile ausgebildet sind.

Durch die Verwendung von wenigstens zwei Blechteilen wird eine kostenschonende Herstellung der Vorrichtung ermöglicht, wobei auch eine Fertigung von Konturen zur Verriegelung in oder an den wenigstens zwei Verriegelungsvorrichtungen erleichtert wird.

Besonders bevorzugt ist, dass die wenigstens zwei Verriegelungselemente wenigstens eine Verriegelungskontur zur lagesicheren Anordnung der wenigstens zwei Verriegelungselemente in oder an den wenigstens zwei Verriegelungsvorrichtungen aufweisen und in oder an den wenigstens zwei Verriegelungsvorrichtungen verriegelbar sind.

Durch die wenigstens eine Verriegelungskontur wird ermöglicht, eine besonders effektive Verriegelung der wenigstens zwei Verriegelungselemente in oder an den wenigstens zwei Verriegelungsvorrichtungen zu generieren. Die wenigstens zwei Verriegelungsvorrichtungen können hierbei zu der wenigstens einen Verriegelungskontur korrespondierende Konturen aufweisen.

Bei einem Ausführungsbeispiel der Erfindung ist vorgesehen, dass die Vorrichtung, vorzugsweise um wenigstens ein mittig an der wenigstens einen Lösevorrichtung angeordnetes Betätigungselement, spiegelsymmetrisch ausgebildet ist.

Durch eine spiegelsymmetrische Vorrichtung wird eine ästhetisch ansprechende Vorrichtung gegeben und eine Anordnung der Vorrichtung bei wenigstens zwei Kotflügeln begünstigt.

Als günstig hat sich erwiesen, dass wenigstens ein Kraftspeicher, vorzugsweise in Form wenigstens einer Feder vorliegend, an wenigstens einem zweiten freien Ende des wenigstens einen Betätigungselementes und/oder an dem Fahrzeugrahmen und/oder an der an dem Fahrzeugrahmen angeordneten Hilfsstruktur angeordnet oder anordenbar ist.

Durch die Anordnung des wenigstens einen Kraftspeichers am wenigstens einen zweite freie Ende kann eine Hebelwirkung zur Kraftübertragung auf die Vorrichtung ausgenützt werden. Durch die Anordnung des Kraftspeichers am Fahrzeugrahmen und/oder einer Hilfsstruktur wird eine Kraftübertragung auf ein Fahrzeug gewährleistet.

Durch den wenigstens einen Kraftspeicher wird ein ungewünschtes Bewegen des wenigstens einen Betätigungselementes in Richtung der Freigabestellung der wenigstens zwei Verriegelungselemente gehemmt, wodurch eine besonders sichere Vorrichtung gegeben wird.

Alternativ ist es möglich, dass das wenigstens eine zweite freie Ende in der Verriegelungsstellung der wenigstens zwei Verriegelungselemente über den wenigstens einen Kraftspeicher mit Kraft entgegen einer Bewegung in eine Freigabestellung der wenigstens zwei Verriegelungselemente beaufschlagbar ist.

Dadurch wird ein ungewünschter Übergang der wenigstens zwei Verriegelungselemente aus der Verriegelungsstellung in die Freigabestellung besonders begünstigt gehemmt.

Der Kraftspeicher liegt hierbei in der Verriegelungsstellung in einem geladenen Zustand vor. Der Kraftspeicher kann durch das Betätigen des wenigstens einen Betätigungselementes zur Überführung der wenigstens zwei Verriegelungselemente in die Freigabestellung weiter mit Kraft beaufschlagt werden. Im Allgemeinen kann der Kraftspeicher jedoch auch in der Verriegelungsstellung in einem nicht geladenen Zustand vorliegen.

In einer vorteilhaften Variante ist vorgesehen, dass das wenigstens eine zweite freie Ende in der Freigabestellung über den wenigstens einen Kraftspeicher mit Kraft in Richtung der wenigstens zwei Verriegelungsvorrichtungen beaufschlagbar ist.

Dadurch wird über den wenigstens einen Kraftspeicher ein Übergang aus der Freigabestellung in die Verriegelungsstellung unterstützt, wodurch ein geringerer Kraftaufwand durch den Bediener bedingt ist.

Wenn die Kraftbeaufschlagung ein Maß aufweist, durch welches der Übergang aus der Freigabestellung in die Verriegelungsstellung allein durch den wenigstens einen Kraftspeicher erwirkt werden kann, ist eine besonders sichere Vorrichtung gegeben, da die wenigstens zwei Verriegelungselemente ohne Bediener der Vorrichtung stets in der Verriegelungsstellung vorliegen. Ungewünschte Bewegungen beispielsweise der Lösevorrichtung während einer Fahrt des Fahrzeuges werden dadurch zudem unterbunden.

Gemäß einer vorteilhaften Ausführungsform der Erfindung ist vorgesehen, dass die wenigstens zwei Verriegelungselemente und/oder die wenigstens zwei Verriegelungsvorrichtungen und/oder wenigstens zwei Halterungen gleichartig ausgebildet sind.

Durch eine Gleichartigkeit von Komponenten der Vorrichtung werden ein Wartungsaufwand und/oder ein Reparaturaufwand reduziert. Zudem wird eine flexiblere Vorrichtung gegeben, da beispielsweise bei einer geänderten konstruktiven Ausgestaltung der wenigstens zwei Verriegelungsvorrichtungen lediglich eine Anpassung an eine neue Sorte Halterungen und/oder Verriegelungselemente erwirkt werden muss.

Als günstig hat sich erwiesen, dass in einem vorbereitenden Verfahrensschritt die wenigstens zwei Verriegelungselemente in der Verriegelungsstellung vorliegend durch die Betätigung des wenigstens eine Betätigungselementes über die wenigstens eine Lösevorrichtung in eine Freigabestellung übergeführt werden, wobei vorzugsweise vorgesehen ist, dass bei einem Übergang aus der Verriegelungsstellung in die Freigabestellung wenigstens ein Kraftspeicher, vorzugsweise durch eine Rotation der wenigstens einen Lösevorrichtung, geladen wird.

Durch in der Freigabestellung vorliegende Verriegelungselemente wird ein Montieren des wenigstens einen Kotflügels erleichtert, da ein Einschieben des wenigstens einen Kotflügels über die wenigstens eine Halterung in die wenigstens zwei Verriegelungsvorrichtungen besonders kraftschonend ermöglicht wird.

Es ist jedoch auch ein Einschieben der wenigstens einen Halterung in eine der wenigstens zwei Verriegelungsvorrichtungen in der Verriegelungsstellung der wenigstens zwei Verriegelungselemente möglich, wobei das Einschieben der wenigstens einen Halterung keinen Übergang der wenigstens zwei Verriegelungselemente aus der Verriegelungsstellung in die Freigabestellung generiert.

Im Allgemeinen kann jedoch ein Übergang aus der Verriegelungsstellung in die Freigabestellung durch das Einschieben der wenigstens einen Halterung vorgesehen sein.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:

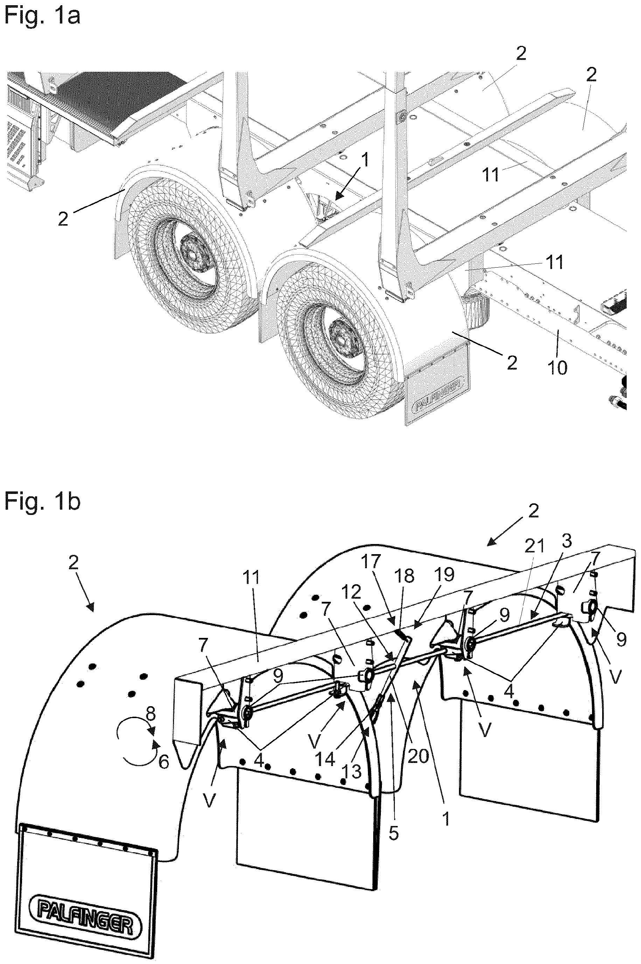

- Fig. 1a: einen Lastkraftwagen mit einer Vorrichtung zur Demontage und/oder Montage zweier Kotflügel gemäß einem bevorzugten Ausführungsbeispiel in perspektivischen Ansicht,
- Fig. 1 b: die Vorrichtung mit zwei Kotflügeln gemäß dem Ausführungsbeispiel nach Fig. 1a in einer perspektivischen Ansicht,
- Fig. 2a: eine Lösevorrichtung der Vorrichtung gemäß dem Ausführungsbeispiel nach Fig. 1a mit einem Hebel und vier Verriegelungselementen in einer perspektivischen Ansicht,
- Fig. 2b: einen an der Vorrichtung gemäß dem Ausführungsbeispiel nach Fig. 1a angeordneten Kotflügel sowie einen Kotflügel nach einer Anordnung an dieser Vorrichtung,
- Fig. 3: eine vergrößerte Darstellung der Vorrichtung nach dem Ausführungsbeispiel gemäß Fig. 1b,
- Fig. 4a: eine Losevorrichtung einer Vorrichtung gemäß einem weiteren bevorzugten Ausführungsbeispiel mit einem Hebel und vier Verriegelungselementen in einer perspektivischen Ansicht,
- Fig. 4b: eine Vorrichtung mit zwei Kotflügeln gemäß einem weiteren bevorzugten Ausführungsbeispiel in einer perspektivischen Ansicht.

Fig. 1a zeigt ein Fahrzeug in Form eines Lastkraftwagens mit einem Forstanhänger zum Transport von land- oder forstwirtschaftlichen Gütern mit vier Kotflügen 2. Jeweils zwei Kotflügel 2 sind durch eine Vorrichtung 1 zur Demontage und/oder Montage der Kotflügel 2 an dem Fahrzeug montiert, wobei die zweite Vorrichtung 1 durch einen Fahrzeugrahmen 10 verdeckt wird.

Die Vorrichtungen 1 sind jeweils über eine Hilfsstruktur 11 des Fahrzeugrahmens 10 mit dem Fahrzeugrahmen 10 verbunden.

Fig. 1b zeigt die Vorrichtung 1 zur Demontage und/oder Montage zweier Kotflügel 2 umfassend eine Lösevorrichtung 3, wobei an der Lösevorrichtung 3 vier Verriegelungselemente 4 angeordnet sind. Die Lösevorrichtung 3 kann im Allgemeinen einstückig oder mehrstückig ausgebildet sein. An der Lösevorrichtung 3 ist ein Betätigungselement 5 angeordnet.

Durch eine Betätigung des Betätigungselementes 5 sind die vier Verriegelungselemente 4 aus einer Freigabestellung F in vier Verriegelungsvorrichtungen 7 gemeinsam verriegelbar und aus einer Verriegelungsstellung V in den vier Verriegelungsvorrichtungen 7 gemeinsam entriegelbar. Eine Verriegelung und/oder Entriegelung ist im Allgemeinen auch an den Verriegelungsvorrichtungen 7 möglich.

Die Anzahl der Betätigungselemente 5, der Verriegelungselemente 4, der Kotflügel 2 sowie der Verriegelungsvorrichtungen 7 ist im Allgemeinen beliebig, wobei zumindest zwei Verriegelungselemente 4 und zumindest zwei Verriegelungsvorrichtungen 7 an der Vorrichtung 1 vorhanden sind, wobei diese zumindest zwei Verriegelungselemente 4 oder zumindest zwei Verriegelungsvorrichtungen 7 auch durch eine Bauteilkomponente gebildet sein können.

Das Betätigungselement 5 ist in Form eines Hebels 5 ausgebildet. Die vier Verriegelungselemente 4 sind bei einer Rotation des Hebels 20 in eine erste Drehrichtung 6 aus der Freigabestellung F in den vier Verriegelungsvorrichtungen 7 verriegelbar und bei einer Rotation des Hebels 20 in eine zweite Drehrichtung 8 aus der Verriegelungsstellung V in den vier Verriegelungsvorrichtungen 7 entriegelbar.

Die zwei Kotflügel 2 weisen jeweils zwei Halterungen 9 zur Anordnung an zwei der vier Verriegelungsvorrichtungen 7 auf, wobei die zwei Halterungen 9 in der Freigabestellung F der vier Verriegelungselemente 4 von zwei Verriegelungsvorrichtungen 7 lösbar und in der Verriegelungsstellung V sowie bei einem Übergang aus der Freigabestellung F in die Verriegelungsstellung V der vier Verriegelungselemente 4 in den zwei Verriegelungsvorrichtungen 7 verriegelbar sind. Die Kotflügel 2 können im Allgemeinen jedoch auch eine anderweitige Anzahl an Halterungen 9 umfassen.

Die zwei Halterungen 9 des Kotflügels 2 sind in der Freigabestellung F und der Verriegelungsstellung V an den zwei der vier Verriegelungsvorrichtungen 7 anordenbar. Im Allgemeinen kann vorgesehen sein, dass die Verriegelungsvorrichtungen 7 zuvor beispielsweise durch eine Betätigung des Betätigungselementes 5 in die Freigabestellung F bewegt werden.

Die Lösevorrichtung 3 ist an einer an dem Fahrzeugrahmen 10 angeordneten Hilfsstruktur 11 drehbar gelagert. Die Lösevorrichtung 3 kann jedoch auch beispielsweise direkt oder indirekt am Fahrzeugrahmen 10 gelagert sein. Die Lösevorrichtung 3 ist mit dem Betätigungselement 5 und den vier Verriegelungselementen 4 stoffschlüssig verbunden.

Die Lösevorrichtung 3 ist besonders bevorzugt als Gestänge 21 ausgebildet. Im Allgemeinen kann jedoch auch eine Lösevorrichtung 3 in Form eines Seiles, einer Kette, eines Drahtes, eines Bandes oder dergleichen vorgesehen sein.

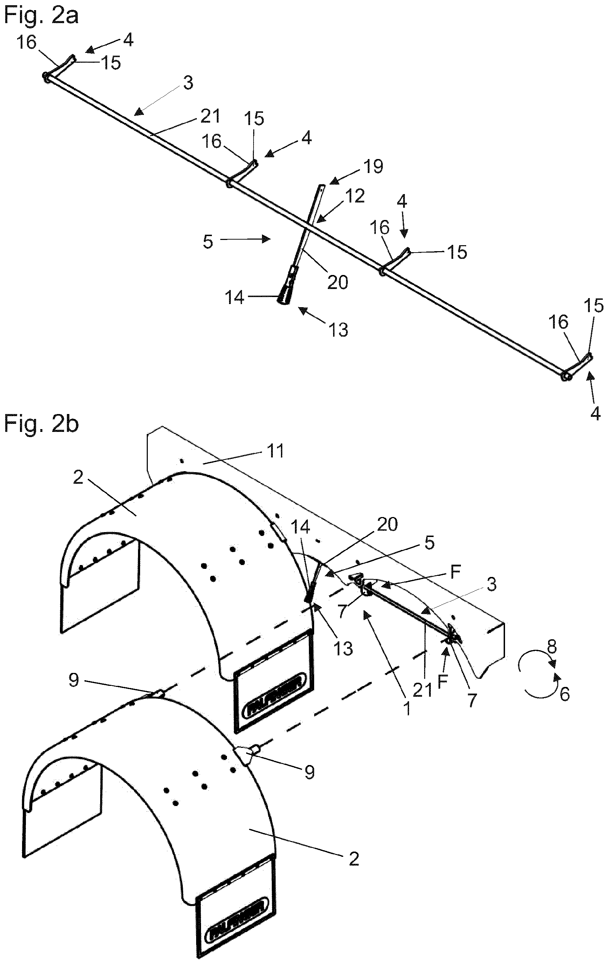

Fig. 2a zeigt die Lösevorrichtung 3 in Form eines Gestänges 21, wobei das Betätigungselement 5 über einen zentralen Bereich 12 an dem Gestänge 21 angeordnet ist. Das Betätigungselement 5 weist ein erstes freies Ende 13 zur Rotation des Gestänges 21 auf, wobei an dem ersten freien Ende 13 ein Griff 14 angeordnet ist.

Die vier Verriegelungselemente 4 sind in Form von vier stoffschlüssig mit dem Gestänge 21 verbundenen Blechteilen 15 ausgebildet.

Die vier Verriegelungselemente 4 weisen jeweils eine Verriegelungskontur 16 zur lagesicheren Anordnung der vier Verriegelungselemente 4 in den vier Verriegelungsvorrichtungen 7 (aus Übersichtlichkeitsgründen nicht dargestellt) auf. Die Verriegelungskonturen 16 sind in den vier Verriegelungsvorrichtungen 7 verriegelbar, wodurch eine lagesichere Positionierung der Halterungen 9 in der Vorrichtung 1 gewährleistet werden kann.

Die Vorrichtung 1 zur Demontage und/oder Montage ist um ein mittig an dem Gestänge 21 angeordnetes Betätigungselement 5 spiegelsymmetrisch ausgebildet.

Fig. 2b zeigt die Vorrichtung 1 mit zwei Kotflügeln 2, wobei der rechte Kotflügel 2 bereits demontiert wurde und der linke Kotflügel 2 noch über die zwei Halterungen 9 an zwei der vier Verriegelungsvorrichtungen 7 der Vorrichtung 1 zur Demontage und/oder Montage angeordnet ist. Die Vorrichtung 1 liegt bereits in der Freigabestellung F vor.

Gezeigt ist eine Anordnung aus einer Vorrichtung 1 mit Verriegelungsvorrichtungen 7. Die Verriegelungsvorrichtungen 7 können hierbei Teil der Vorrichtung 1 oder als gesonderte Bauteile ausgebildet sein.

Der Kotflügel 2 kann von der Vorrichtung 1 demontiert werden, wobei die Verriegelungselemente 4 noch in der Verriegelungsstellung V in den Verriegelungsvorrichtungen 7 vorliegen, indem durch ein Betätigen des Betätigungselementes 5 die Verriegelungselemente 4 über die Lösevorrichtung 3 durch eine Rotation der Lösevorrichtung 3 - ausgebildet als Gestänge 21 - gemeinsam aus der Verriegelungsstellung V gelöst werden und die Halterungen 9 von den Verriegelungsvorrichtungen 7 entfernt werden.

Durch das Betätigen des Betätigungselementes 5 kann ein Kraftspeicher 17 geladen werden.

Der Kotflügel 2 kann an der Vorrichtung 1 zumindest über zwei Varianten montiert werden: Einerseits, indem die Verriegelungselemente 4 in der Verriegelungsstellung V vorliegen. Andererseits ist es möglich den Kotflügel 2 zu montieren, indem die Verriegelungselemente 4 in der Freigabestellung F vorliegen.

Die Montage des Kotflügels 2 erfolgt im zuletzt genannten Fall durch folgende Verfahrensschritte:
- Anordnen des Kotflügels 2 über die vorhandenen Halterungen 9 in den Verriegelungsvorrichtungen 7,
- Betätigen des Betätigungselementes 5 zur Rotation der Lösevorrichtung 3, wobei die Verriegelungselemente 4 in den Verriegelungsvorrichtungen 7 gemeinsam verriegelt werden.

Bei der Montage des Kotflügels 2 im zuerst genannten Fall entfällt der Verfahrensschritt des Betätigens des Betätigungselementes 5, wobei die Halterungen 9 beispielsweise in den Verriegelungsvorrichtungen 7 durch ein Einschieben einrasten und dadurch verriegelt werden.

In einem vorbereitenden Verfahrensschritt können die in der Verriegelungsstellung V vorliegenden Verriegelungselemente 4 durch die Betätigung des Betätigungselementes 5 über die Lösevorrichtung 3 in die Freigabestellung F übergeführt werden. Bei einem Übergang aus der Verriegelungsstellung V in die Freigabestellung F wird der Kraftspeicher 17 durch eine Rotation der Lösevorrichtung 3 geladen.

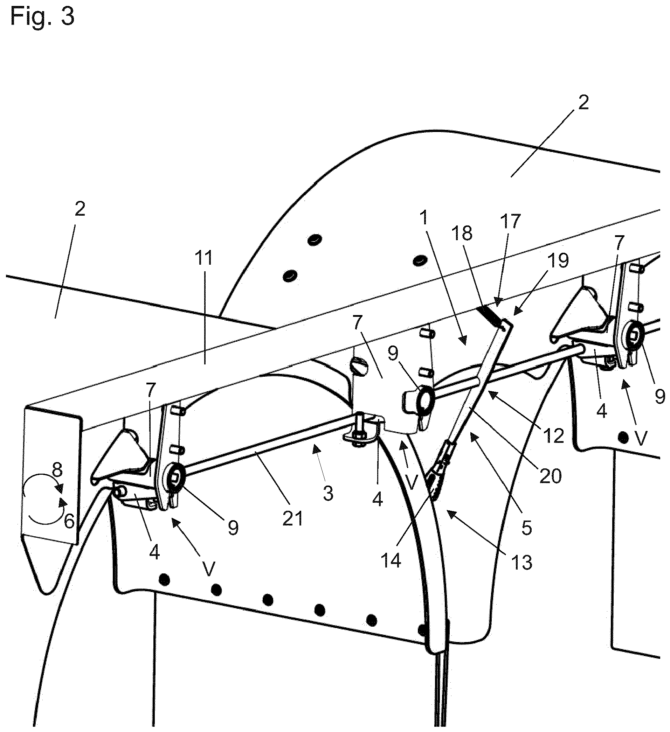

Fig. 3 unterscheidet sich von Fig. 1b nur dahingehend, dass die Vorrichtung 1 in einem vergrößerten Ausschnitt dargestellt ist. Die Verriegelungselemente 4 liegen in der Verriegelungsstellung V vor.

Ein Kraftspeicher 17 in Form einer Feder 18 ist an einem zweiten freien Ende 19 des Betätigungselementes 5 und an der an dem Fahrzeugrahmen 10 angeordneten Hilfsstruktur 11 angeordnet.

Im Allgemeinen können jedoch auch mehrere Kraftspeicher 17 oder Kraftspeicher 17, welche direkt am Fahrzeugrahmen 10 angeordnet sind, bei der Vorrichtung 1 eingesetzt werden.

Das zweite freie Ende 19 ist in der Verriegelungsstellung V der vier Verriegelungselemente 4 über den Kraftspeicher 17 mit Kraft entgegen einer Bewegung in eine Freigabestellung F der vier Verriegelungselemente 4 beaufschlagbar. Das zweite freie Ende 19 ist in der Freigabestellung F über den Kraftspeicher 17 mit Kraft in Richtung der vier Verriegelungsvorrichtungen 7 beaufschlagbar.

Die vier Verriegelungselemente 4 und die vier Verriegelungsvorrichtungen 7 sowie die vier Halterungen 9 sind gleichartig ausgebildet.

An der Vorrichtung 1 sind zwei Kotflügel 2 umfassend zwei Halterungen 9 zur Anordnung an den vier Verriegelungsvorrichtungen 7 vorgesehen, wobei die zwei Kotflügel 2 gleichzeitig durch eine Betätigung des Betätigungselementes 5 montiert oder demontiert werden können.

Es ist jedoch auch möglich, beispielsweise zwei Kotflügel 2 umfassend genau eine Halterung 9 oder einen Kotflügel 2 umfassend genau zwei Halterungen 9 zur Anordnung an zumindest zwei Verriegelungsvorrichtungen 7 durch die Vorrichtung 1 zu montieren oder zu demontieren.

Es ist auch möglich, die Verriegelungselemente 4 (beispielsweise paarweise) versetzt an der Lösevorrichtung 3 und/oder die Verriegelungsvorrichtungen 7 (beispielsweise paarweise) in variierenden Höhen am Fahrzeug anzuordnen, um zumindest zwei Kotflügel 2 in unterschiedlichen Stellungen des Betätigungselementes 5 durch die Vorrichtung 1 montieren und/oder demontieren zu können.

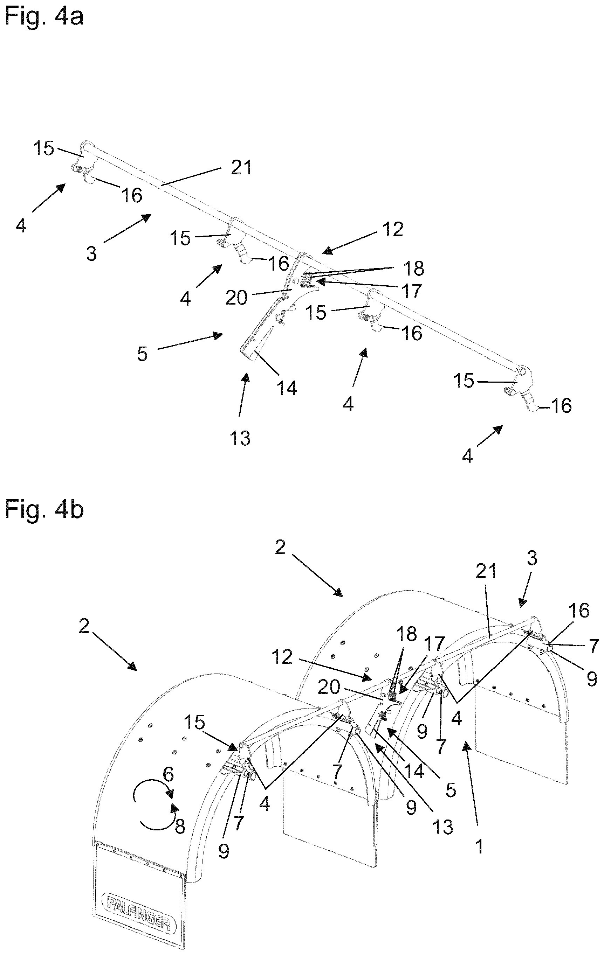

Fig. 4a und 4b zeigen eine alternative Ausgestaltung der Vorrichtung 1 beziehungsweise Bauteilkomponenten dieser, wobei die Verriegelungselemente 4 in Form eines Bleches 15 mit einem gebogenen Steg vorliegen, wobei der Steg die Verriegelungskontur 16 umfasst.

In Fig. 4a ist ersichtlich, dass das Betätigungselement 5 lediglich ein freies Ende 13 aufweist, wobei der Kraftspeicher 17 zwei Federn 18 umfasst.

Das Betätigungselement 5 umfasst einen weiteren Kraftspeicher in Form einer weiteren Feder im Bereich des Griffes 14, wobei das Betätigungselement 5 ein mit einem bewegbaren Teil des Griffes 14 bewegungsgekoppeltes Sicherungsmittel aufweist. Im Allgemeinen kann der bewegbare Teil des Griffes stoffschlüssig oder mittelbar mit dem Sicherungsmittel verbunden sein und in Wirkverbindung mit dem weiteren Kraftspeicher stehen.

In Fig. 4b ist die Vorrichtung 1 während dem Eintrittes der Verriegelungselemente 4 in Verriegelungsvorrichtungen 7 ersichtlich, wobei die Verriegelungsvorrichtungen 7 in dieser Ausführungsform durch eine mantelflächenseitige Öffnung einer rohrförmigen Halterung gegeben sind, in welche die Verriegelungsvorrichtungen 7 zur Verriegelung über die Verriegelungskonturen 16 eingreifen.

### Bezugszeichenliste:

Vorrichtung (1)
Kotflügel (2)
Lösevorrichtung (3)
Verriegelungselement (4)
Betätigungselement (5)
erste Drehrichtung (6)
Verriegelungsvorrichtung (7)
zweite Drehrichtung (8)
Halterung (9)
Fahrzeugrahmen (10)
Hilfsstruktur (11)
zentraler Bereich (12)
erstes freies Ende (13)
Griff (14)
Blechteil (15)
Verriegelungskontur (16)
Kraftspeicher (17)
Feder (18)
zweites freies Ende (19)
Hebel (20)
Gestänge (21)
Freigabestellung (F)
Verriegelungsstellung (V)

## Patentansprüche

1. Vorrichtung (1) zur Demontage und/oder Montage wenigstens eines Kotflügels (2), umfassend wenigstens eine Lösevorrichtung (3), insbesondere in Form eines Gestänges (21), wobei an der wenigstens einen Lösevorrichtung (3) wenigstens zwei Verriegelungselemente (4) angeordnet sind, und wenigstens ein an der wenigstens einen Lösevorrichtung (3) angeordnetes Betätigungselement (5), wobei die wenigstens zwei Verriegelungselemente (4) durch eine Betätigung des wenigstens einen Betätigungselementes (5) aus einer Freigabestellung (F) in oder an wenigstens zwei Verriegelungsvorrichtungen (7) gemeinsam verriegelbar und/oder aus einer Verriegelungsstellung (V) in oder an den wenigstens zwei Verriegelungsvorrichtungen (7) gemeinsam entriegelbar sind.

2. Vorrichtung (1) nach Anspruch 1, wobei das wenigstens eine Betätigungselement (5) in Form wenigstens eines Hebels (5) ausgebildet ist und die wenigstens zwei Verriegelungselemente (4) bei einer Rotation des wenigstens einen Hebels (20) in eine erste Drehrichtung (6) aus der Freigabestellung (F) in oder an den wenigstens zwei Verriegelungsvorrichtungen (7) verriegelbar und/oder bei einer Rotation des wenigstens einen Hebels (20) in eine zweite Drehrichtung (8) aus der Verriegelungsstellung (V) in oder an den wenigstens zwei Verriegelungsvorrichtungen (7) entriegelbar sind.

3. Vorrichtung (1) nach Anspruch 1 oder 2, wobei der wenigstens eine Kotflügel (2) wenigstens eine Halterung (9) zur Anordnung an den wenigstens zwei Verriegelungsvorrichtungen (7) aufweist, wobei die wenigstens eine Halterung (9) in der Freigabestellung (F) der wenigstens zwei Verriegelungselemente (4) von den wenigstens zwei Verriegelungsvorrichtungen (7) lösbar und in der Verriegelungsstellung (V) und/oder bei einem Übergang aus der Freigabestellung (F) in die Verriegelungsstellung (V) der wenigstens zwei Verriegelungselemente (4) in oder an den wenigstens zwei Verriegelungsvorrichtungen (7) verriegelbar ist, wobei vorzugsweise vorgesehen ist, dass die wenigstens eine Halterung (9) in der Freigabestellung (F) und/oder der Verriegelungsstellung (V) an den wenigstens zwei Verriegelungsvorrichtungen (7) anordenbar ist.

4. Vorrichtung (1) nach einem der vorangehenden Ansprüche, wobei die wenigstens eine Lösevorrichtung (3), vorzugsweise an einem Fahrzeugrahmen (10) und/oder einer an dem Fahrzeugrahmen (10) angeordneten Hilfsstruktur (11), drehbar gelagert oder lagerbar ist und/oder die wenigstens eine Lösevorrichtung (3) mit dem wenigstens einen Betätigungselement (5) und/oder den wenigstens zwei Verriegelungselementen (4) stoffschlüssig verbunden ist.

5. Vorrichtung (1) nach einem der vorangehenden Ansprüche, wobei das wenigstens eine Betätigungselement (5) über einen zentralen Bereich (12) an der wenigstens einen Lösevorrichtung (3) angeordnet ist und wenigstens ein erstes freies Ende (13) zur Rotation der wenigstens einen Lösevorrichtung (3) aufweist, wobei vorzugsweise vorgesehen ist, dass an dem wenigstens einem ersten freien Ende (13) wenigstens ein Griff (14) angeordnet ist.

6. Vorrichtung (1) nach einem der vorangehenden Ansprüche, wobei die wenigstens zwei Verriegelungselemente (4) in Form wenigstens zweier, vorzugsweise stoffschlüssig mit der wenigstens einen Lösevorrichtung (3) verbundenen, Blechteile (15) ausgebildet sind.

7. Vorrichtung (1) nach einem der vorangehenden Ansprüche, wobei die wenigstens zwei Verriegelungselemente (4) wenigstens eine Verriegelungskontur (16) zur lagesicheren Anordnung der wenigstens zwei Verriegelungselemente (4) in oder an den wenigstens zwei Verriegelungsvorrichtungen (7) aufweisen und in oder an den wenigstens zwei Verriegelungsvorrichtungen (7) verriegelbar sind.

8. Vorrichtung (1) nach einem der vorangehenden Ansprüche, wobei die Vorrichtung (1), vorzugsweise um wenigstens ein mittig an der wenigstens einen Lösevorrichtung (3) angeordnetes Betätigungselement (5), spiegelsymmetrisch ausgebildet ist.

9. Vorrichtung (1) nach einem der vorangehenden Ansprüche, wobei wenigstens ein Kraftspeicher (17), vorzugsweise in Form wenigstens einer Feder (18) vorliegend, an wenigstens einem zweiten freien Ende (19) des wenigstens einen Betätigungselementes (5) und/oder an dem Fahrzeugrahmen (10) und/oder an der an dem Fahrzeugrahmen (10) angeordneten Hilfsstruktur (11) angeordnet oder anordenbar ist.

10. Vorrichtung (1) nach Anspruch 9, wobei das wenigstens eine zweite freie Ende (19) in der Verriegelungsstellung (V) der wenigstens zwei Verriegelungselemente (4) über den wenigstens einen Kraftspeicher (17) mit Kraft entgegen einer Bewegung in eine Freigabestellung (F) der wenigstens zwei Verriegelungselemente (4) beaufschlagbar ist und/oder das wenigstens eine zweite freie Ende (19) in der Freigabestellung (F) über den wenigstens einen Kraftspeicher (17) mit Kraft in Richtung der wenigstens zwei Verriegelungsvorrichtungen (7) beaufschlagbar ist.

11. Vorrichtung (1) nach einem der vorangehenden Ansprüche, wobei die wenigstens zwei Verriegelungselemente (4) und/oder die wenigstens zwei Verriegelungsvorrichtungen (7) und/oder wenigstens zwei Halterungen (9) gleichartig ausgebildet sind.

12. Vorrichtung (1) nach einem der Ansprüche 1 bis 11 mit wenigstens einem Kotflügel (2) umfassend wenigstens zwei Halterungen (9) zur Anordnung an wenigstens zwei Verriegelungsvorrichtungen (7) und/oder mit wenigstens zwei Kotflügeln (2) umfassend wenigstens eine Halterung (9) zur Anordnung an wenigstens zwei Verriegelungsvorrichtungen (7), wobei wenigstens zwei Halterungen (9) in oder an wenigstens zwei Verriegelungsvorrichtungen (7) anordenbar oder angeordnet sind.

13. Verfahren zur Demontage wenigstens eines Kotflügels (2) durch wenigstens eine Vorrichtung (1) nach einem der Ansprüche 1 bis 12, wobei der wenigstens eine Kotflügel (2) über wenigstens eine Halterung (9) an wenigstens einer von wenigstens zwei Verriegelungsvorrichtungen (7) angeordnet ist und wenigstens zwei Verriegelungselemente (4) in einer Verriegelungsstellung (V) in oder an den wenigstens zwei Verriegelungsvorrichtungen (7) vorliegt, **dadurch gekennzeichnet, dass** durch ein Betätigen wenigstens eines Betätigungselementes (5) die wenigstens zwei Verriegelungselemente (4) über wenigstens eine Lösevorrichtung (3), vorzugsweise durch eine Rotation der wenigstens einen Lösevorrichtung (3), gemeinsam aus der Verriegelungsstellung (V) gelöst werden und die wenigstens eine Halterung (9) von der wenigstens einen Verriegelungsvorrichtung (7) entfernt wird, wobei vorzugsweise vorgesehen ist, dass durch das Betätigen des wenigstens einen Betätigungselementes (5) wenigstens ein Kraftspeicher (17) geladen wird.

14. Verfahren zur Montage wenigstens eines Kotflügels (2) durch wenigstens eine Vorrichtung (1) nach einem der Ansprüche 1 bis 12, wobei wenigstens zwei Verriegelungselemente (4) in einer Verriegelungsstellung (V) oder einer Freigabestellung (F) vorliegen, **gekennzeichnet durch** die folgenden, vorzugsweise in chronologischer Reihenfolge durchgeführten, Verfahrensschritte:
- Anordnen wenigstens eines Kotflügels (2) über wenigstens eine Halterung (9) in wenigstens einer von wenigstens zwei Verriegelungsvorrichtungen (7),
- Betätigen wenigstens eines Betätigungselementes (5), vorzugsweise zur Rotation wenigstens einer Lösevorrichtung (3), wobei die wenigstens zwei Verriegelungselemente (4) in oder an den wenigstens zwei Verriegelungsvorrichtungen (7) gemeinsam verriegelt werden.

15. Verfahren nach Anspruch 14, wobei in einem vorbereitenden Verfahrensschritt die wenigstens zwei Verriegelungselemente (4) in der Verriegelungsstellung (V) vorliegend durch die Betätigung des wenigstens eine Betätigungselementes (5) über die wenigstens eine Lösevorrichtung (3) in eine Freigabestellung (F) übergeführt werden, wobei vorzugsweise vorgesehen ist, dass bei einem Übergang aus der Verriegelungsstellung (V) in die Freigabestellung (F) wenigstens ein Kraftspeicher (17), vorzugsweise durch eine Rotation der wenigstens einen Lösevorrichtung (3), geladen wird.
